Europäisches Patentamt

(19) European Patent Office

Office européen des brevets

(11) Numéro de publication: **0 039 262**
**B1**

(12) **FASCICULE DE BREVET EUROPEEN**

(45) Date de publication du fascicule du brevet:
08.06.83

(51) Int. Cl.³: **C 08 L 71/06,** C 08 G 65/36

(21) Numéro de dépôt: **81400512.0**

(22) Date de dépôt: **31.03.81**

(54) **Procédé de durcissement de résines furanniques.**

(30) Priorité: **24.04.80 FR 8009194**

(73) Titulaire: **SOCIETE CHIMIQUE DES CHARBONNAGES SA, Tour Aurore Cédex 5, F-92080 Paris la Défense 2 (FR)**

(43) Date de publication de la demande:
**04.11.81 Bulletin 81/44**

(72) Inventeur: **Cousin, Michel, 81, rue Wattiez, F-62218 Loison Sous Lens (FR)**
Inventeur: **Meyer, Nicolas, 1, boulevard de la Salle des Fêtes, F-62160 Bully Les Mines (FR)**

(45) Mention de la délivrance du brevet:
**08.06.83 Bulletin 83/23**

(74) Mandataire: **Rieux, Michel et al, Tour Aurore Service Propriété Industrielle Place des Reflets Cédex 5, F-92080 Paris La Défense (FR)**

(84) Etats contractants désignés:
**AT BE CH DE GB IT LI LU NL SE**

(56) Documents cités:
**EP-A-0 006 373**
**FR-A-2 465 685**

**ENCYCLOPEDIA OF POLYMER SCIENCE AND TECHNOLOGY, Interscience, J. Wiley & Sons, 1967 Londres, GB "Furan Polymers", pages 432 et suivants**

## Procédé de durcissement de résines furanniques

La présente invention concerne la polymérisation de résines furanniques et plus particulièrement le durcissement de résines furanniques en présence de nouveaux catalyseurs.

Les résines furanniques obtenues par condensation d'un ou plusieurs alcools furanniques constituent une catégorie bien connue de résines synthétiques. La condensation de l'alcool furannique réalisée en présence d'un catalyseur acide fournit un poly (alcool furfurylique) qui est un liquide visqueux.

Celui-ci peut être ensuite durci en présence d'un catalyseur acide tel qu'un acide minéral comme l'acide phosphorique, l'acide sulfurique ou l'acide chlorhydrique ou un acide organique comme l'acide benzénesulfonique, phénolsulfonique, paratoluènesulfonique, ou bien un mélange de ces acides avec des acides minéraux forts.

Les résines furanniques sont utilisées dans la fabrication de toute une gamme d'éléments composites avec comme matériaux appropriés le sable et les fibres de verre. Les fibres de verre sont particulièrement adaptées pour la fabrication de stratifiés furanniques mais le durcissement des résins furanniques à l'aide de catalyseurs classiques constituées par des solutions aqueuses d'acides conduit à des matériaux qui présentent une porosité élevée. Les résines furanniques sont aussi utilisées pour la fabrication de matériaux stratifiés à base de résine phénolique armée d'un renfort de fibre de verre et revêtus d'une composition à base de résine furannique comportant éventuellement comme couche de finition une résine thermodurcissable telle que par exemple une résine de polyester: dans ce cas les matériaux obtenus par durcissement des résines furanniques à l'aide de solutions aqueuses d'acides ont un comportement au feu très médiocre qui ne peut correspondre qu'au classement de la couche de finition. De tels matériaux sont par exemple décrits dans la demande européenne publiée sous le numéro 15785.

On a maintenant trouvé le moyen de résoudre ces problèmes et en particulier d'obtenir des matériaux stratifiés présentant un comportement au feu amélioré.

La présente invention concerne un provédé de durcissement de résines furanniques à l'aide de catalyseurs acides caractérisé en ce qu'il consiste à faire le durcissement de la résine furannique en présence d'une solution anhydre concentrée d'anhydride borique cotenant au moins 5% en poids d'anhydride borique, un ou plusieurs solvants organiques et au moins un acide concentré.

Les solutions anhydres concentrées d'anhydride borique qui conviennent pour la mise en œuvre du procédé de l'invention sont les solutions décrites dans EP-A1-0 006 373 et FR-A-2 465 685. Elles contiennent au moins 5% en poids d'anhydride de borique, un ou plusieurs solvants organiques choisis parmi les mono ou les polyalcools, les trialkylborates, les diacétals de formol et au moins un acide choisi parmi l'acide sulfurique concentré et les acides sulfoniques à noyau aromatique. De préférence, ces solutions contiennent 10 à 35% en poids d'anhydride borique, 15 à 50% en poids d'acide et 30 à 60% de solvant organique. Selon l'invention ces solutions sont utilisées en quantité comprise entre 0,5 et 10% et de préférence de 1 à 6% par rapport à la quantité de résine furannique à durcir. De préférence, on utilise des solutions qui présentent des concentrations élevées en acide afin de diminuer le plus possible la quantité de solvants introduite.

Les résines furanniques que l'on durcit selon le procédé de l'invention sont des produits bien connus du commerce qu'on prépare par condensation de l'alcool furfurylique à l'aide d'un acide. Les produits obtenus sont des liquides noirs qui présentent une viscosité comprise entre 0,05 et 15 pa/s (50–15 000cps). On peut éventuellement avant durcissement de la résine furannique additionner du furfural afin d'abaisser la viscosité de la résine furannique.

Le procédé de la présente demande convient pour la fabrication de matériaux les plus divers en particulier de matériaux composites renforcés à l'aide de fibres de verre. Par fibres de verre on entend toutes les formes classiques comprenant par exemple, les nappes de fibres coupées, les voiles de verre, les fibres de verre coupées, les tissus de fibres de verre etc . . .

Le procédé de la présente demande permet de préparer des matériaux composites qui présentent grace à l'absence d'eau dans le catalyseur une porosité réduite et un bon indice d'oxygène caractéristique d'une bonne résistance au feu.

De plus, il permet d'améliorer le comportement au feu de matériaux stratifiés en particulier de matériaux stratifiés à base de résine phénolique armée d'un renfort, comportant sur une ou les deux faces une couche d'une composition de résine furannique en contact avec une composition d'une résine thermodurcissable constituée d'une résine polyester insaturé. Ces matériaux stratifiés sont décrits dans la demande déposée le même jour par la demanderesse et intitulée «Stratifiés phénoliques borés». Selon cette demande on prépare des matériaux stratifiées décrits ci-dessus qui présentent un comportement au feu amélioré lorsque la résine furannique est durcie selon la présente demande en mettant en œuvre une solution anhydre concentrée d'anhydride borique: l'utilisation de ce catalyseur conduit à un matériau qui présente globalement un classement M2 ou même M1 à l'épiradiateur (mesurée selon la méthode d'essais décrite dans le Journal Officiel du 26 juillet 1973: décret du 4 juin 1973), alors que la couche de revêtement constituée d'une résine de polyester insaturé présente seulement elle même un classement M3 ou M4.

Les exemples suivants illustrent la présente invention.

## Exemple 1

Sur un moule traité par un agent de démoulage, on imprègne au rouleau un mat de fibres de verre à l'aide d'une résine furannique constituée d'alcool furfurylique condensée en milieu acide et vendue sous la marque QUACCOR 1001 par la firme QUAKER OATS. On utilise 100 parties en poids de résine furannique et le rapport pondéral

$$\frac{\text{Verre}}{\text{Résine}} \text{ est de } \frac{1}{3}.$$

La résine est durcie à l'aide de 3,5 parties en poids d'une solution d'anhydride borique consti-tuée de:

| | |
|---|---|
| Trimethylborate | 100 parties |
| Anhydride borique | 60 parties |
| Acide paratoluène sulfonique | 60 parties |

Le temps de gélification de la résine est de 20 heures. On soumet le matériau obtenu à un «recuit» à 70°C pendant 2 heures. Après ce traitement l'indice d'oxygène du matériau obtenu déterminé selon la norme NF T 57-071 est de 31,7. Par ailleurs le matériau présente une porosité réduite.

## Exemple 2

L'exemple 1 est répété, en utilisant 5 parties en poids de solution d'anhydride borique comme catalyseur au lieu de 3,5. Après avoir subi le même traitement que dans l'exemple 1 on obtient un matériau qui présente un indice d'oxygène de 34,1.

## Exemple 3 – Exemple comparatif

L'exemple 1 est répété mais en utilisant 3,5 parties en poids d'un catalyseur classique pour durcir la résine furannique.

Ce catalyseur est constituée d'une solution à 65% en poids d'acide paratoluène – sulfonique. Le temps de gélification de la résine est de 2 h 30.

L'indice d'oxygène du matériau obtenu n'est que de 28,2. Le matériau obtenu est plus poreux que ceux décrits dans les exemples 1 et 2.

## Exemple 4

Sur un moule traité par un agent de démoulage on applique au pinceau une couche de 0,2 mm d'épaiseur d'une résine de polyester insaturé à base d'acide isophtalique et contenant du trichlor-éthylphosphate et du dioxyde de titane. Cette résine est durcie à l'aide de peroxydes classiques et est additionnée de sel de cobalt comme agent accélérateur. Son classement au feu déterminé à l'épiradiateur selon la norme NFP 92 501 est M3 c'est-à-dire qu'il est «moyennement inflammable».

Sur cette couche de résine incomplètement durcie on applique au pinceau une couche de résine furannique de 0,2 mm d'épaiseur composé de:

– Condensat d'alcool furfurylique en milieu acide     100 parties (résine QUACCOR 1001 marque déposée de la firme QUAKER OATS)
– Silice pyrogénée     2 parties
– Solution d'anhydride borique constituée de:

| | | |
|---|---|---|
| Trimethylborate: | 100 parties | |
| Anhydride borique: | 60 parties | |
| Acide para-toluène: | 60 parties | |
| Sulfonique | | |
| Acide sulfurique: | 6 parties | 1,5 partie |

On laisse la couche de résine furannique durcir à température ambiante pendant 20 minutes: la surface est alors légèrement poisseuse. On dépose sur cette couche un mat de fibres de verre puis une résine phénolique obtenue par condensation du formol dans un rapport molaire

$$\frac{\text{Formol}}{\text{Phenol}}$$

1,5 et présentant une viscosité de 1pa/s à 20°C (10poises). La résine phénolique est durcie par addition à 100 parties de 10 parties d'une solution aqueuse à 65% en poids d'acide paratoluènesulfonique. On fait pénétrer la résine dans le mat de fibres de verre à l'aide d'un rouleau. Le rapport pondéral

$$\frac{\text{Verre}}{\text{Résine}} \text{ est de } \frac{1}{3}.$$

On laisse durcir pendant environ 4 heures à température ambiante et on démoule le matériau composite obtenu qui présente côté face polyester un classement au feu M2 déterminé à l'épi-radiateur. C'est-à-dire que le matériau stratifié obtenu est «difficilement inflammable».

## Revendications

1. Procédé de durcissment de résines furanniques à l'aide de catalyseurs acides, caractérisé en ce qu'il consiste à faire le durcissement de la résine furannique en présence d'une solution anhydre concentrée d'anhydride borique contenant au moins 5% en poids d'anhydride borique, un ou plusieurs solvants organiques choisis parmi les mono ou les polyalcools, les trialkylborates, les diacétals de formol et au moins un acide choisi parmi l'acide sulfurique concentré et les acides sulfoniques à noyau aromatique, la solution étant utilisée en quantité comprise entre 0,5 et 10% par rapport à la quantité de résine furannique à durcir.

2. Procédé selon la revendication 1, caractérisé en ce que la solution contient 10 à 35% en poids d'anhydride borique, 15 à 50% en poids d'acide et 30 à 60% en poids de solvant organique.

3. Procédé selon la revendication 1, caractérisé en ce que la solution est utilisée en quantité comprise entre 1 et 6% par rapport à la quantité de résine furannique à durcir.

## Claims

1. A method of hardening furane resins by means of acid catalysts, characterised in that it consists in hardening the furane resin in the presence of a concentrated anhydrous solution of boric anhydride containing at least 5% by weight of boric anhydride, one or several organic solvents selected from mono- or polyalcohols, trialkylborates, formaldehyde diacetals and at least one acid selected from concentrated sulphuric acid and sulphonic acids having an aromatic nucleus, the solution being used at an amount of between 0.5 and 10% with respect to the quantity of furane resin to be hardened.

2. A method as claimed in claim 1, characterised in that the solution contains 10 to 35% by weight of boric anhydride, 15 to 50% by weight of acid and 30 to 60% by weight of organic solvent.

3. A method as claimed in claim 1, characterised in that the solution is used at an amount of between 1 and 6% with respect to the amount of furane resin to be hardened.

## Patentansprüche

1. Verfahren zur Härtung von Furanharzen mittels sauren Katalysatoren, dadurch gekennzeichnet, dass es darin besteht, die Härtung des Furanharzes in Anwesenheit einer wasserfreien konzetrierten Borsäureanhydridlösung durchzuführen, die mindestens 5 Gew.-% Borsäureanhydrid, ein oder mehrere organische Lösungmittel ausgewählt aus der Gruppe bestehend aus den Monooder Polyalkoholen, den Trialkylboraten, den Formoldiazetalen sowie mindestens eine Säure ausgewählt aus der Gruppe bestehend aus konzentrierter Schwefelsäure und den aromatischen Sulfonsäuren enthält, wobei die Lösung in einer Menge zwischen 0,5 und 10% in bezug auf die zu härtende Furanharzmenge verwendet wird.

2. Verfahren nach Anspruch 1, dadurch gekennzeichnet, dass die Lösung 10 bis 35 Gew.-% Borsäureanhydrid, 15 bis 50 Gew.-% Säure und 30 bis 60 Gew.-% organisches Lösungsmittel enthält.

3. Verfahren nach Anspruch 1, dadurch gekennzeichnet, dass die Lösung in einer Menge zwischen 1 und 6% in bezug auf die zu härtende Furanharzmenge verwendet wird.